# EUROPEAN PATENT SPECIFICATION

(11) **EP 3 677 500 B1**
(45) Date of publication and mention of the grant of the patent: **05.03.2025**
(21) Application number: 20150223.4
(22) Date of filing: 03.01.2020
(51) Int. Cl.: B64C 1/14

(54) **MODULAR WINDSHIELD**
MODULARE WINDSCHUTZSCHEIBE
PARE-BRISE MODULAIRE

(30) Priority: 03.01.2019 US 201962788112 P
(43) Date of publication of application: 08.07.2020
(73) Proprietor: Textron Innovations Inc., Providence, Rhode Island 02903 (US)
(72) Inventor: GRIFFITHS, Paul Charles, Roanoke, TX 76262 (US); LOVELAND, Steven, Fort Worth, TX 76244 (US); BRITTAIN, Allen, Flower Mound, TX 75028 (US)
(74) Representative: Barker Brettell LLP

(56) References cited:
- EP-A1- 3 385 160
- US-A- 4 081 581
- US-A- 5 289 996
- US-A1- 2014 097 295
- US-A1- 2017 166 293
- US-B2- 9 434 478

## Description

### Background

Aircraft sometimes comprise windshields with complicated geometries. In some cases, the entirety of a windshield may be constructed of a single acrylic or polycarbonate component. In spite of some windshields being constructed as singular components, some portions of those windshields are unavoidably more likely to be damaged in response to being struck by environmental elements, such as birds, when an aircraft is travelling at a relatively high speed. For example, consider a case where a windshield comprises both a central component that offers primary forward viewing from a cabin and opposing side components that offer angled forward and side views from the cabin. When the aircraft is travelling forward at high speed, the chances of a bird strike or other collision having a destructive effect to the central component is higher as compared to the likelihood that a side component being damaged. With such a unitary construction, if the central component is damaged, the entirety of the windshield must be replaced regardless of whether the side components were damaged. Document US 2017/166293 A1 discloses according to its abstract an aircraft windshield that improves pilot and co-pilot's perception of the outside world. The windshield includes a transparent panel held inside a structure of the aircraft, in which the upper part and the lower part are bridged so that the loads applied to the panel are (at least partially) diverted. Due to part of the loads applied on the panel being diverted, it is possible to provide a larger window panel than currently available that offers better visibility to the outside.

### Brief Description of The Drawings

**Figure 1** is an oblique view of an aircraft comprising a modular windshield according to this disclosure;
**Figure 2** is a front view of the aircraft of Figure 1; and
**Figure 3** is an oblique view looking forward through the modular windshield from within a cabin of the aircraft of Figure 1.

### Summary

According to the invention there is provided a modular windshield as defined by the appended claims.

### Detailed Description

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

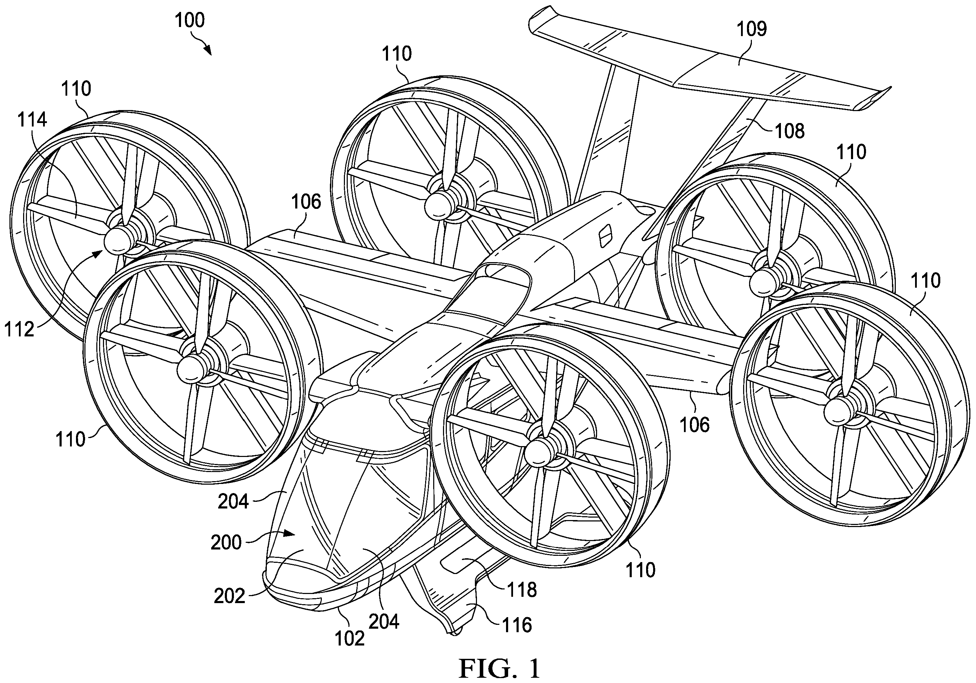

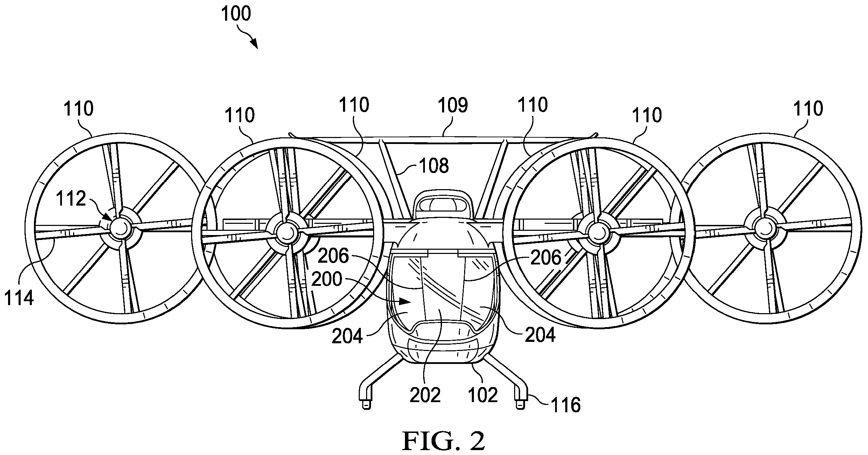

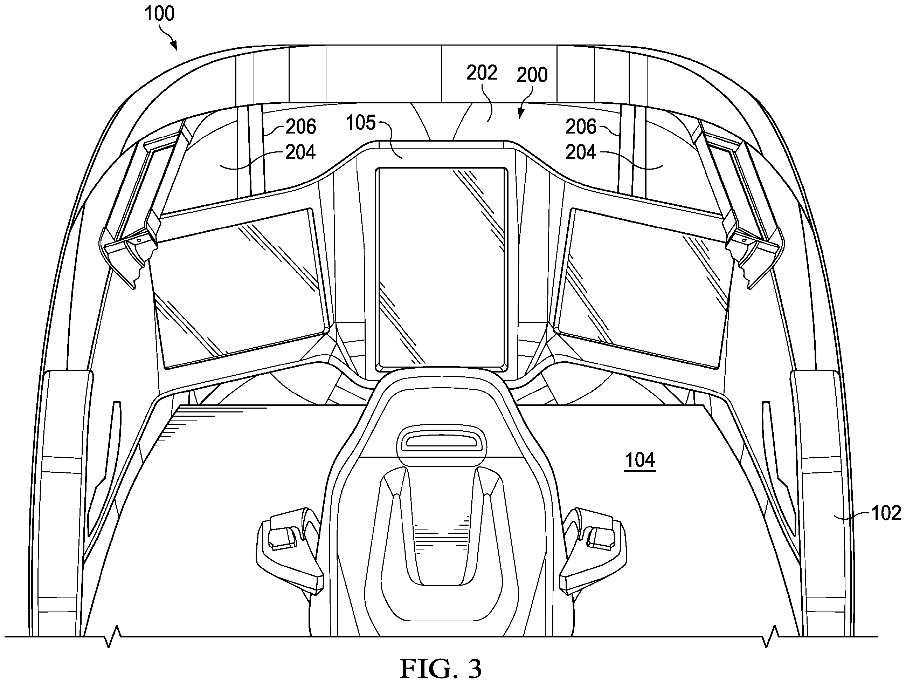

Referring now to Figures 1-3 an aircraft 100 according to this disclosure is shown. Aircraft 100 is generally configured as a vertical takeoff and landing (VTOL) aircraft that is operable in an airplane mode associated with forward flight and a helicopter mode associated with vertical takeoff from and landing to a landing zone. Aircraft 100 comprises a fuselage 102, a cabin 104, a dash 105 disposed in the cabin 104, a plurality of wings 106 extending from the fuselage 102, and an empennage 108 having a horizontal stabilizer 109. Aircraft 100 also comprises a plurality of ducted fans 110 that may be selectively rotated with respect to the fuselage 102 in order to transition the aircraft 100 between the airplane mode and the helicopter mode.

Each ducted fan comprises a rotor system 112 having a plurality of selectively rotatable rotor blades 114 configured to generate thrust when selectively rotated in each of the airplane mode and the helicopter mode. In the embodiment shown, aircraft 100 comprises six ducted fans 110. Two ducted fans 110 are carried by, supported by and/or otherwise coupled to the fuselage 102, two ducted fans 110 are coupled to the wings 106, and two ducted fans 110 are carried by, supported by, and/or otherwise coupled to the empennage 108. However, in alternative embodiments, any number of ducted fans 110 may be used depending on the configuration and design of the aircraft. Aircraft 100 also comprises a landing gear 116 configured to support aircraft 100 when not in flight. Additionally, landing gear 116 comprises an auxiliary folding step system 118 for use by occupants entering and exiting aircraft 100. The aircraft 100 further comprises a modular windshield 200.

The modular windshield 200 generally comprises a plurality of windshield components, namely, a central component 202 and two side components 204, and two support pillars 206. The pillars 206 are disposed between the central component 202 and each of the two side components 204. This modular setup allows for easier removal and/or replacement of any of the central component 202 and side components 204 without having to replace all three. In comparison, if the central component 202 and the two side components 204 were a single unitary structure, damage to one of the areas (central or one of the two sides) would necessitate replacement of the entire windshield at a greater cost and with greater difficulty. Instead, if the central component 202 is damaged by a bird strike or experiences some other failure, the central component 202 alone can be replaced without having to replace either of the side components. In some cases, the pillars 206 exist primarily within the cabin 104. In embodiments of the present invention, little or no portion of the pillar 206 is disposed between the central component 202 and the side components 204. Alternatively, the pillars 206 can be provided more as an H-channel shape that receives the edges of the components 202, 204 therein.

Beyond the above-described advantage of being able to selectively replace the components 202, 204, the modular nature of the modular windshield 200 also allows design selections to be made that can improve resistance to windshield failure while also minimizing aircraft 100 weight.

In embodiments of the present invention, at least one of the side components 204 is constructed of acrylic while the central component 202 is constructed of polycarbonate. In this way, the central component 202, which is more likely to experience a high energy strike by a bird or other matter, can be constructed relatively more robustly as compared to the acrylic side components 204. In examples not covered by the appended claims, any other differentiated material selection can be made so that a relative strength or resistance failure capability of any of the central component 202 and the side components 204 can be tailored to the anticipated environments and uses of the aircraft 100.

The central component 202 is provided with a greater thickness as compared to the thickness of at least one of the side components 204.

In alternative examples not covered by the appended claims, a modular windshield can comprise fewer component parts and the materials and thicknesses of the materials can be selected as desired while maintaining the ability to easily replace one component of the plurality of components.

At least one embodiment is disclosed, and modifications of the embodiment(s) and/or features of the embodiment(s) made by a person having ordinary skill in the art can be made within the scope of the appended claims. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rl, and an upper limit, Ru, is disclosed, any number falling within the range is specifically disclosed. In particular, the following numbers within the range are specifically disclosed: R=Rl +k * (Ru-Rl), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed.

Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow. Each and every claim is incorporated as further disclosure into the specification and the claims are embodiment(s) of the present invention. Also, the phrases "at least one of A, B, and C" and "A and/or B and/or C" should each be interpreted to include only A, only B, only C, or any combination of A, B, and C.

## Claims

1. A modular windshield (200), comprising:
a central component (202);
a first side component (204) and a second side component (204);
a first support pillar (206) disposed primarily behind the central component (202) and the first one side component (204) to support the central component (202) and the first one side component (204), wherein little or no portion of the first support pillar (206) is disposed between the central component (202) and the first one side component (204); and
a second support pillar (206) disposed primarily behind the central component (202) and the second side component to support the central component (202) and the second side component (204), wherein little or no portion of the second support pillar (206) is disposed between the central component (202) and the second side component (204);
wherein i) the central component (202) is constructed of polycarbonate and wherein at least one of the first side component (204) and the second side component is constructed of acrylic and ii) the central component (202) comprises a thickness greater than a thickness of at least one of the first side component (204) and the second side component (204).

2. An aircraft (100), comprising:
the modular windshield (200) of claim 1.

3. The modular windshield (200) of claim 1, or the aircraft (100) of claim 2, wherein at least one of the first side component (204) and the second side component (204) comprises a substantially curved portion configured to transition between a portion providing a side view and a portion providing a front view.

4. The modular windshield (200) of claim 1 or of claim 3, or the aircraft (100) of claim 2 or of claim 3, wherein the lowest portion of the central component (202) is higher than the lowest portion of at least one of the first side component (204) and the second side component (204).

5. The modular windshield (200) of claim 1 or of any of claims 3 to 4, or the aircraft (100) of any of claims 2 to 4, wherein the first side component (204) and the second side component (204) form mirrored equivalents of each other.

6. The modular windshield (200) of claim 1 or of any of claims 3 to 5, or the aircraft (100) of any of claims 2 to 5, wherein a most forward portion of the central component (202) is disposed further forward than a most forward portion of at least one of the first side component (204) and the second side component (204).

7. The modular windshield (200) of claim 1 or of any of claims 3 to 6, or the aircraft (100) of any of claims 2 to 6, wherein the central component (202) is curved.

## Patentansprüche

1. Modulare Windschutzscheibe (200), die umfasst:
ein mittleres Bauteil (202);
ein erstes Seitenbauteil (204) und ein zweites Seitenbauteil (204);
eine erste Stützsäule (206), die vorwiegend hinter dem mittleren Bauteil (202) und dem ersten einen Seitenbauteil (204) angeordnet ist, um das mittlere Bauteil (202) und das erste eine Seitenbauteil (204) zu stützen, wobei wenig oder kein Abschnitt der ersten Stützsäule (206) zwischen dem mittleren Bauteil (202) und dem ersten einen Seitenbauteil (204) angeordnet ist; und
eine zweite Stützsäule (206), die vorwiegend hinter dem mittleren Bauteil (202) und dem zweiten Seitenbauteil (204) angeordnet ist, um das mittlere Bauteil (202) und das zweite Seitenbauteil (204) zu stützen, wobei wenig oder kein Abschnitt der ersten Stützsäule (206) zwischen dem mittleren Bauteil (202) und dem zweiten Seitenbauteil (204) angeordnet ist;
wobei i) das mittlere Bauteil (202) aus Polycarbonat gebildet ist, und wobei zumindest eines des ersten Seitenbauteils (204) und des zweiten Seitenbauteils aus Acryl gebildet ist, und ii) das mittlere Bauteil (202) eine Dicke umfasst, die größer als eine Dicke von zumindest einem des ersten Seitenbauteils (204) und des zweiten Seitenbauteils (204) ist.

2. Luftfahrzeug (100), das umfasst:
eine modulare Windschutzscheibe (200) nach Anspruch 1.

3. Modulare Windschutzscheibe (200) nach Anspruch 1 oder Luftfahrzeug (100) nach Anspruch 2, wobei zumindest eines des ersten Seitenbauteils (204) und des zweiten Seitenbauteils (204) einen im Wesentlichen gekrümmten Abschnitt umfasst, der dazu ausgestaltet ist, um zwischen einem Abschnitt, der eine Seitenansicht bereitstellt, und einem Abschnitt, der eine Vorderansicht bereitstellt, überzugehen.

4. Modulare Windschutzscheibe (200) nach Anspruch 1 oder 3 oder Luftfahrzeug (100) nach Anspruch 2 oder 3, wobei der niedrigste Abschnitt des mittleren Bauteils (202) höher als der niedrigste Abschnitt von zumindest einem des ersten Seitenbauteils (204) und des zweiten Seitenbauteils (204) ist.

5. Modulare Windschutzscheibe (200) nach Anspruch 1 oder nach einem der Ansprüche 3 bis 4 oder Luftfahrzeug (100) nach einem der Ansprüche 2 bis 4, wobei das erste Seitenbauteil (204) und das zweite Seitenbauteil (204) gespiegelte Äquivalente voneinander bilden.

6. Modulare Windschutzscheibe (200) nach Anspruch 1 oder nach einem der Ansprüche 3 bis 5 oder Luftfahrzeug (100) nach einem der Ansprüche 2 bis 5, wobei ein vorderster Abschnitt des mittleren Bauteils (202) weiter vorne als ein vorderster Abschnitt von zumindest einem des ersten Seitenbauteils (204) und des zweiten Seitenbauteils (204) angeordnet ist.

7. Modulare Windschutzscheibe (200) nach Anspruch 1 oder einem der Ansprüche 3 bis 6 oder Luftfahrzeug (100) nach einem der Ansprüche 2 bis 6, wobei das mittlere Bauteil (202) gekrümmt ist.

## Revendications

1. Pare-brise modulaire (200), comprenant :
un composant central (202) ;
un premier composant latéral (204) et un second composant latéral (204) ;
un premier pilier de soutien (206) disposé principalement derrière le composant central (202) et le premier composant latéral (204) pour soutenir le composant central (202) et le premier composant latéral (204), dans lequel une petite partie voire aucune partie du premier pilier de soutien (206) est disposée entre le composant central (202) et le premier composant latéral (204) ; et
un second pilier de soutien (206) disposé principalement derrière le composant central (202) et le second composant latéral pour soutenir le composant central (202) et le second composant latéral (204), dans lequel une petite partie voire aucune partie du second pilier de soutien (206) est disposée entre le composant central (202) et le second composant latéral (204) ;
dans lequel i) le composant central (202) est fabriqué en polycarbonate et dans lequel au moins l'un du premier composant latéral (204) et du second composant latéral est fabriqué en acrylique et ii) le composant central (202) comprend une épaisseur supérieure à une épaisseur d'au moins l'un du premier composant latéral (204) et du second composant latéral (204).

2. Aéronef (100), comprenant :
le pare-brise modulaire (200) selon la revendication 1.

3. Pare-brise modulaire (200) selon la revendication 1, ou aéronef (100) selon la revendication 2, dans lequel au moins l'un du premier composant latéral (204) et du second composant latéral (204) comprend une partie sensiblement incurvée configurée pour effectuer une transition entre une partie offrant une vue latérale et une partie offrant une vue de face.

4. Pare-brise modulaire (200) selon la revendication 1 ou la revendication 3, ou aéronef (100) selon la revendication 2 ou la revendication 3, dans lequel la partie la plus basse du composant central (202) est plus haute que la partie la plus basse d'au moins l'un du premier composant latéral (204) et du second composant latéral (204).

5. Pare-brise modulaire (200) selon la revendication 1 ou selon l'une quelconque des revendications 3 à 4, ou aéronef (100) selon l'une quelconque des revendications 2 à 4, dans lequel le premier composant latéral (204) et le second composant latéral (204) constituent des équivalents en miroir l'un de l'autre.

6. Pare-brise modulaire (200) selon la revendication 1 ou selon l'une quelconque des revendications 3 à 5, ou aéronef (100) selon l'une quelconque des revendications 2 à 5, dans lequel une partie la plus en avant du composant central (202) est disposée plus en avant qu'une partie la plus en avant d'au moins l'un du premier composant latéral (204) et du second composant latéral (204).

7. Pare-brise modulaire (200) selon la revendication 1 ou selon l'une quelconque des revendications 3 à 6, ou aéronef (100) selon l'une quelconque des revendications 2 à 6, dans lequel le composant central (202) est incurvé.
